(19) Europäisches Patentamt
European Patent Office
Office européen des brevets

(11) **EP 4 202 682 A1**

(12) **EUROPEAN PATENT APPLICATION**

(43) Date of publication:
**28.06.2023 Bulletin 2023/26**

(21) Application number: **21290097.1**

(22) Date of filing: **23.12.2021**

(51) International Patent Classification (IPC):
**G06F 9/54** $^{(2006.01)}$     **G06F 9/48** $^{(2006.01)}$

(52) Cooperative Patent Classification (CPC):
**G06F 9/544; G06F 9/4881**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GrAI Matter Labs S.A.S.**
**75012 Paris (FR)**

(72) Inventors:
• **Van Berkel, Kees**
  **5656 AG Eindhoven (NL)**
• **Bamberg, Lennart**
  **5656 AG Eindhoven (NL)**
• **Waeijen, Luc Johannes Wilhelmus**
  **5656 AG Eindhoven (NL)**

(74) Representative: **V.O.**
**P.O. Box 87930**
**2508 DH Den Haag (NL)**

(54) **DEADLOCK-FREE SCHEDULING OF A TASK GRAPH ON A MULTI-CORE PROCESSOR**

(57)     A method for mapping an acyclic task graph specifying a neural network for execution by a multi-core processor, the acyclic task graph comprising a plurality of nodes interconnected by directed edges, each node representing a computational task to be performed in the process of executing the neural network, each edge directed from a source node to a destination node representing the dependency of the computational task represented by the destination node on event messages from a computational task represented by the source node, the multi-core processor comprising a plurality of processor cores configured to exchange messages in a message exchange network on chip (NoC) comprising NoC routers interconnected by NoC links, the method for mapping comprising: assigning (S52) a priority to each node of the task graph and assigning the prioritized node to a processor core of the multi-core processor, and assigning (S62) a priority to each edge and assigning the prioritized edge to an (acyclic) NoC path of NoC links; where the priority assigned to each node is the highest one of the priorities assigned to its incoming edges, and where the priority assigned to each edge exceeds the priority of the node from which it is outgoing.

(S1) Receiving a specification of an acyclic task graph

(S2) Receiving a specification of a multi-core processor

(S3) Initially assigning a lowest priority to all nodes and all edges

(S4) Current subset of edges = subset without source node

(S5) Prioritize subset of nodes

SBN=∅ ?

(S6) Prioritize subset of edges

N

Y

Exit

FIG 2

EP 4 202 682 A1

**Description**

BACKGROUND

The present application pertains to a method of mapping a task graph representing a neural network on a multi-core processor.

The present application further pertains to a method of executing a neural network represented by a mapped task graph on a multi-core processor.

The present application still further pertains to a multi-core processor configured to execute a neural network represented by a task graph mapped thereon.

A neural network processor executes an artificial neural network defined by a set of mutually dependent neural elements. A neural element may be capable to receive event messages from a respective subset of one or more source neural elements. A neural element may further be capable to transmit event messages to a respective subset of one or more destination neural elements. In some examples, denoted as stateful, a neural element maintains a neural state, which it updates in response to received input messages and it transmits event messages subject to its neural state. In other examples, denoted as stateless, a neural element does not maintain an internal state. It may for example randomly generate output messages or respond directly to input messages. The transmission of an event message by a neural element is to some extent comparable to firing or spiking of a biological neuron. A neural element may include itself in its own subset of one or more source neural elements. In that case the neural element is also included in its own subset of one or more destination neural elements. In principle neural elements behave asynchronously. Their operation is not necessarily controlled by a central clock, but by the incoming event messages.

Whereas it is in theory possible to implement each neural element as a separate data processing element, it is in practice the case that the neural network processor is provided as a set of processing cores that are mutually connected by a message exchange network on chip (NoC) comprising NoC routers interconnected by NoC links. Therein respective neural elements have a respective storage location. However, resources like computation and control logic as well as message exchange network capacity for exchange of messages are shared by a plurality of neural elements.

The asynchronous behavior of neural elements of a neural network on a multi-core processor leads to irregular execution and inter-core communication patterns. Due to the limited availability of resources it is necessary to provide message buffers wherein an event message for a destination neural element can be buffered. The message buffers may include output buffers to buffer event messages waiting for transmission to the destination core, and input buffers to buffer event messages waiting for execution by the destination core. On the one hand the buffer capacity should not be too small to avoid the risk of deadlock. On the other hand it should be avoided that the buffer capacity is over-dimensioned to avoid excessive buffer costs.

SUMMARY

In view of the above it is an object to provide an improved method of mapping an asynchronous neural network on a multi-core processor wherein deadlock is avoided with a modest amount of storage space.

In the improved method as discussed below, it is presumed that the neural network for execution by a multi-core processor is represented as a task graph comprising nodes and edges interconnecting nodes. The nodes represent respective computational task to be performed in the process of executing the neural network. Each edge directed from a source node to a destination node represents the dependency of a computational task represented by the destination node on event messages from a computational task represented by the source node. A computational task represented by a node may be a single operation, such as the execution of an instruction of an instruction set, but may alternatively be execution of a sequence of such operations or execution of a complete program module. For clarity, it is initially presumed that the task graph is acyclic. However, as disclosed further in this document, the method can easily be extended to cyclic graphs.

The improved method maps the task graph on a multi-core processor that comprises a plurality of processor cores configured to exchange messages in a message exchange network on chip (NoC) comprising NoC routers interconnected by NoC links. In one example of the multi-core processor each processor core (apart from those at the edges of the multi core processor) is coupled to a proper router that is coupled by a first pair of NoC links to neighboring routers at mutually opposite sides in a first direction and a second pair of NoC links to neighboring routers at mutually opposite sides in a second direction transverse to the first direction. This architecture is very suitable for general applications. However, various other message exchange network architectures are possible that may be specifically designed for executing particular classes of neural networks. For example a multi core processor having an NoC providing for unidirectional links along one or two axis is particularly suitable for implementing a feedforward layered neural network. In another example the multi-core processor is organized in a three-dimensional manner, having processor cores and their associated routers arranged in a three-dimensional grid. In an embodiment of this example each router is coupled by a first pair of NoC links to neighboring routers at mutually opposite sides in a first direction, a second pair of NoC links to neighboring routers at mutually opposite sides in a second direction transverse to the first direction and a third pair of NoC links to neighboring routers at mutually opposite sides in a third direction transverse to the first direction and to the second direction.

Regardless the architecture used for the NoC, the improved method is configured to achieve the abovementioned method by prioritizing the nodes and the edges of the task graph and assigning the prioritized nodes and edges to the processor cores of the multi-core processor, and to the NoC links respectively. Therewith the priority assigned to each node is the highest one of the priorities assigned to its incoming edges, and the priority assigned to each edge exceeds the priority of the node from which it is outgoing. With the proposed priority setting there is always a core or router that can make progress, viz. the one with the overall, "system-wide" highest priority". The priority is for example indicated by a ranking, wherein a smaller priority value indicates a higher priority or reversely. The ranking may be indicated by arbitrary type of numbers, but integer numbers are preferred for more efficient comparison. To indicate a difference in priority, it suffices that a different priority value is assigned. For example five tasks having a subsequently increasing priority may be assigned priority values 1,2,3,4,5 or 3, 30, 32, 48, 70, as long as the priority values are consistently ordered.

As noted above, the method as described above can also be extended for application to cyclic task graphs.

An edge starting and ending at the same node is an example of a cycle, in particular an example of an auto cycle in the task graph. A task graph may also include longer cycles, i.e. cycles that involve a number N of nodes and edges larger than 1. A cyclic task graph is necessary to specify a recurrent neural network.

In an embodiment of the method, preprocessing steps are applied to convert the cyclic task graph into an acyclic task graph subsequently, the mapping can take place with the improved method as described above.

In this connection it is noted that a back edge is an edge that, when removed from the task graph, reduces the number of cycles. A set of back edges is complete when their removal results in a connected, yet acyclic graph. In general a complete back-edge set is not unique, for example a task graph having a first node with a first incoming edge from a second node that has a second incoming edge from a first node may be converted in an acyclic task graph either by removing the first incoming edge or by removing the second incoming edge. One choice may be more attractive than another.

It is noted that event message production and event message consumption on back edges must ultimately be periodic. That is, after a finite sequence of production and consumption bursts, a strictly periodic production-consumption pattern must set in. As a result, there is a finite number of edge states to be considered. Typically, there are only a handful of such edge states.

It is assumed that the sizes of production and consumption bursts are governed by a protocol. For example, each consumption burst matches the previous production burst. A production-consumption protocol is bounded when in each edge state the consumption deficit is bounded by a number, say, B. So, for a given bounded production-consumption protocol, each back edge has an edge bound B.

In accordance with the observations above, an improved method for mapping a cyclic task graph specifying an neural network for execution by a multi-core processor is as follows. Analogous to the case specified above, the cyclic task graph comprises a plurality of nodes interconnected by directed edges. Each node represents a computational task to be performed in the process of executing the neural network, and each edge directed from a source node to a destination node represents the dependency of a computational task represented by the destination node on event messages from a computational task represented by the source node. However, in addition to the method specified for the acyclic case, the method includes a preliminary step of specifying a complete set of back edges for the cyclic task graph.

When parts of successive neural network layers of a neural network are mapped on a same core, a local buffer is needed to store the intermediate results. The size of the buffer must be sufficient to accommodate the maximum possible number of messages of a first neural network layer to be consumed by a succeeding second neural network layer mapped onto the same core. In case of pipelined execution, it can be considered to accommodate multiple firings, so that the pipeline can empty its results in the buffer. (Otherwise some partially completed computations must be flushed, and recomputed later.) In the acyclic case it may be considered to restrict the number of firings, so as to limit the buffer size requirements. In the cyclic case this is different, because the mutually successive neural network layers can be part of a cycle, wherein not only the operation of the second neural network layer is dependent on messages from the first neural network layer, but also the operation of the first neural network layer is directly or indirectly dependent on messages from the second neural network layer.

In this connection it is further observed that for a cyclic graph it is not possible to assign edge and node priorities in the same way as for an acyclic graph. In particular, this applies to the requirement of the acyclic graph that the priority assigned to each edge exceeds the priority of the node from which it is outgoing. This is resolved by introducing a priority decrement in the priority of the nodes that produce the messages for the back edge.

As noted it is presumed that for each back edge the production-consumption behavior is ultimately periodic, and that there is a bounded production-consumption protocol with a corresponding back-edge bound B. The method comprising a scheduling procedure combining assigning of priorities to tasks and computation of input-buffer sizes

As a further preliminary step an implied acyclic task graph is constructed from the cyclic task graph by removal of the complete set of back edges from the cyclic task graph.

Subsequently priorities are assigned to edges and nodes of the constructed implied acyclic task graph with the method already described above for acyclic task graphs.

As an additional step a capacity is assigned to each input buffer that exceeds the sum of back-edge bounds of all back-edges mapped onto that input buffer. In practical applications it is the case that production and consumption of messages at the node before a back edge together behave periodically. In the simplest case the number of messages produced in each period is constant, i.e. each period N messages are produced and N messages are consumed, where N is a fixed number. In other cases the number of tokens may vary each period, but has an upper bound N. More complex periodic behaviors can be envisioned, where the buffer content after each period may vary. The key point is that, for a given periodic production-consumption pattern (possibly involving multiple productions and multiple consumptions), an upper bound N can be given for the difference between production and consumption at any point in time. That upper bound then specifies a buffer length. When such a buffer is introduced for each back edge, deadlock is avoided.

The present invention pertains to a method that maps a task graph representing a neural network for execution by a multi-core processor.

More specifically, the method assigns each task of the task graph to a processor core of the multi-core processor, and it assigns each task dependency to an (acyclic) NoC path of NoC links. As a result, each NoC link is assigned a limited number of priority numbers. A mapping is said to be valid if the number of assigned priority numbers does not exceed the number of supported priority numbers per link and per core.

It is noted that two dependent (connected) tasks may be mapped onto the same core. The edge connecting these two tasks is considered local to that core.

A embodiment of the method further comprises executing the artificial neural network specified by the acyclic task graph that is mapped on the multi core processor. Said executing comprises:

> a processor core of the multi core processor executing a first task assigned thereto;
> the processor core receiving an input message for a second task;
> the processor core comparing a priority of the second task with the priority of the first task;
> the processor core, upon determining that the priority of the second task exceeds the priority of the first task:
>
>> suspending the execution of the first task;
>> executing the second task; and
>> resuming execution of the first task upon completion of the second task.

An improved multi-core processor as disclosed herein comprises a plurality of processor cores configured to exchange messages in a message exchange network on chip comprising NoC routers interconnected by NoC links. The multi-core processor is configured to execute a neural network specified as a task graph comprising a plurality of nodes interconnected by directed edges. Therein each node represents a computational task to be performed in the process of executing the neural network and each edge directed from a source node to a destination node represents the dependency of the computational task represented by the destination node on event messages from a computational task represented by the source node. Each task of the task graph is assigned to a processor core of the multi-core processor, and each task dependency is mapped to an (acyclic) NoC path of NoC links. The processor core of the multi-core processor (comprises an input buffer for receiving input messages, and the processor core is configured to:

> execute a first task assigned thereto;
> receive an input message for a second task;
> compare a priority of the second task with the priority of the first task;
> the processor core is further configured upon determining that the priority of the second task exceeds the priority of the first task to:
>
>> suspend the execution of the first task;
>> execute the second task; and
>> resume execution of the first task upon completion of the second task.

BRIEF DESCRIPTION OF THE DRAWINGS

The and other aspects are disclosed in more detail with reference to the drawings. Therein:

> FIG. 1A schematically shows an exemplary acyclic task graph for a neural network;
> FIG. 1B schematically shows a multi-core processor;
> FIG. 2 shows a method of mapping an acyclic task graph onto a multi-core processor;
> FIG. 3 shows steps of the method of FIG. 2 in more detail;
> FIGs. 4A - 4G illustrate subsequent operational stages of the method of FIG. 2, 3 applied to the exemplary acyclic task graph of FIG. 1A;
> FIG. 5 shows a method of mapping an cyclic task graph onto a multi-core processor;
> FIG. 6 illustrates a method of executing the neural network represented by the mapped task graph on a multi-core processor;

DETAILED DESCRIPTION OF EMBODIMENTS

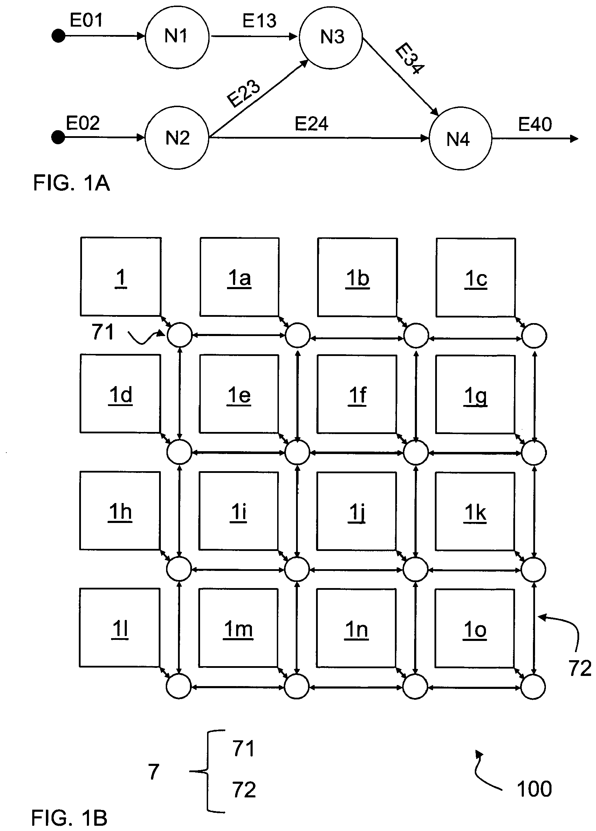

FIG. 1A schematically shows an exemplary acyclic task graph for a neural network comprising a collection of nodes N1, N2, N3 and N4 and edges E01, E02, E13, E23, E24, E34 and E40. The nodes represent respective computational tasks to be performed in the process of executing the neural network. Each edge directed from a source node to a destination node represents the dependency of a computational task represented by the destination node on event messages from a computational task represented by the source node. For the purpose of illustration a very simple task graph is shown in FIG. 1A. In practice a task graph may have a substantially higher number of nodes and edges. In the general case a task graph is defined by its collection of nodes {N1, ..., Nn} and directed edges Eij , wherein

Eij is a directed edge from a source node Ni to a destination node Nj if i>0 and j>0;
E0j is a directed edge from an input to a destination node Nj if j>0;
Ei0 is a directed edge from a source node Ni to an output if i>0.

The task graph of FIG. 1A, which is acyclic in this example, is to be mapped onto a multi-core processor, for example the multi-core processor 100 as shown in FIG. 1B. In the example shown in FIG. 1B, the multi-core processor (100) has processor cores 1, 1a, .... 1o and a message exchange network (7). The message exchange network (7) includes a plurality of network interfaces (71) which are coupled by network links (72). In this example, each processor core (1) is associated with a proper network interface (71) and the network interfaces (71) are coupled by network links (72).

The message exchange network 7 enables the neural network devices 1, 1a,...,1o to exchange messages. Examples of such messages are event-messages indicating that a neural network element of a neural network device "fires". The message serves as an input to one or more addressed a neural network elements of a recipient neural network device in the network. Event messages directed to a neural network element of a same neural network device may be handled by that neural network device therewith bypassing the message exchange network 7. Alternatively handling these messages may involve the message exchange network 7, for example to use facilities offered by the message exchange network 7, for example buffering and controllable delay. Also other message exchange network architectures may be contemplated, comprising respective clusters of neural network devices. Also a message exchange network architecture may be contemplated wherein the neural network devices are clustered in layers, wherein each neural network device, except the last one can send messages to a neural network device in a next layer in the sequence.

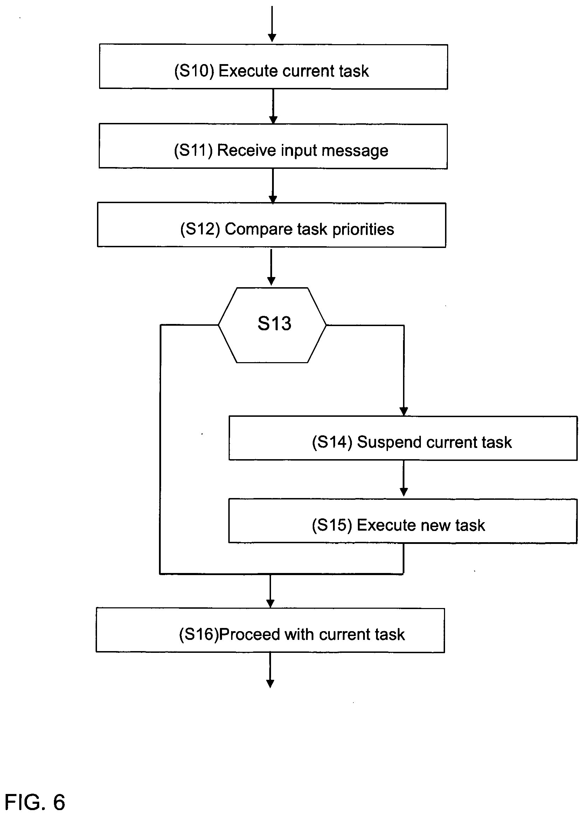

In a multi-core processor, each core can sequentially execute tasks of the task graph, and can submit output messages to tasks running on the same or on other cores. Each task of the task graph is assigned a priority number. When multiple tasks are ready to be executed by a core, it selects the task with the highest priority as described in more detail with reference to FIG. 6.

Likewise, each event message is assigned a priority number. When multiple messages are ready to be forwarded, the NoC router selects the message with the highest priority. Furthermore, each link between two NoC routers can only carry event messages of limited set of priority numbers. In other words it only has a limited number of virtual channels. It is noted that such virtual channels may be implemented in various ways. Examples are described in Mello et al., "Virtual Channels in Networks on Chip: Implementation and Evaluation on Hermes NoC ", Conference Paper ·January 2005 DOI: 10.1145/1081081.1081128 ·Source: DBLP.

Each NoC link has a bounded capacity for lossless message transmission per supported priority number. Accordingly, so-called back pressure may limit the progress of individual NoC routers and hence of individual processor cores if the available capacity is exhausted. A deadlock occurs when none of the routers or cores can proceed.

According to the present disclosure, the acyclic network is mapped to the multi-core processor (100) according to the following criteria.

A priority is assigned to each node of the task graph and the prioritized node is assigned to a processor core of the multi-core processor.

Also each edge is assigned a priority and the prioritized edges are assigned to an (acyclic) path of message exchange network links.

Furthermore, the priorities are assigned according to the following rules:

a) The priority assigned to each node is the highest one of the priorities assigned to its incoming edges, and
b) The priority assigned to each edge exceeds the priority of the node from which it is outgoing.

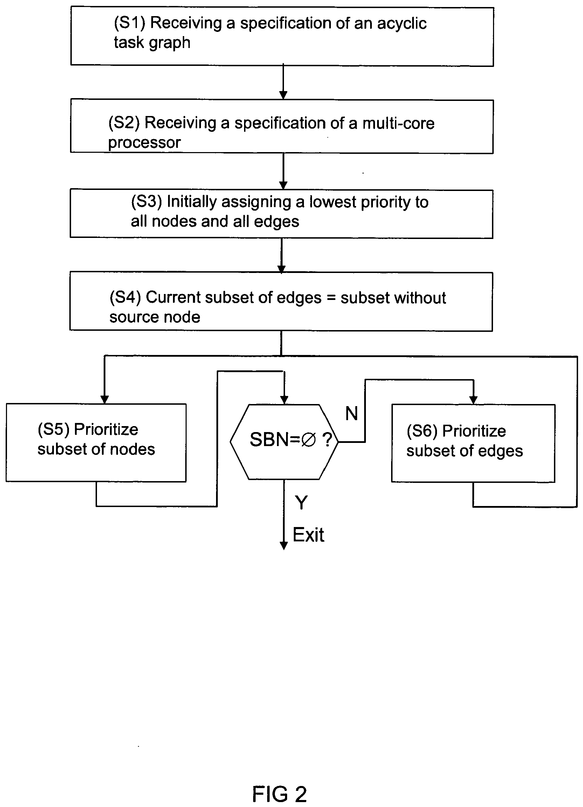

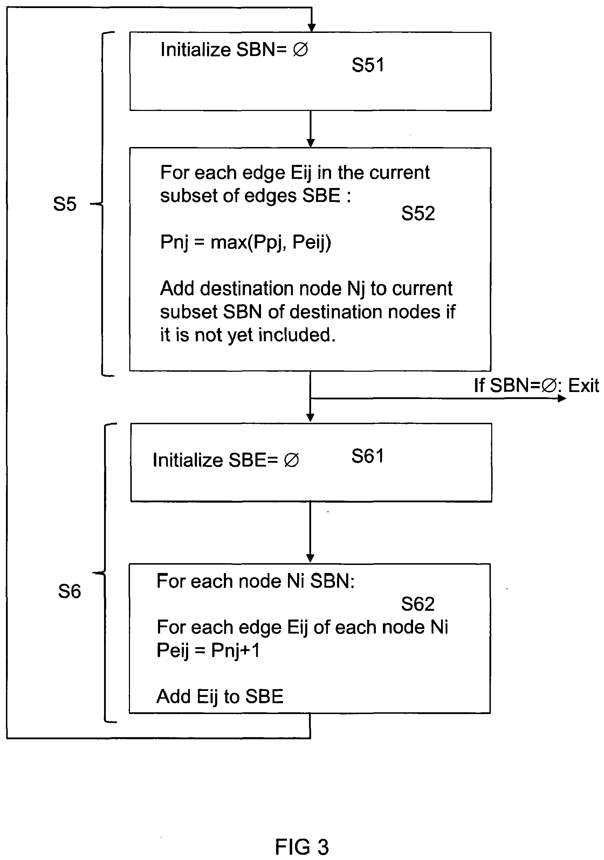

An exemplary method of performing the mapping on the basis of these rules is illustrated in FIG. 2 and FIG. 3. Therein FIG. 3 shows two steps of the method in more detail.

As shown therein, the exemplary method comprises the step S1, wherein a specification is received of an acyclic task graph representing a neural network, for example the task graph shown in FIG. 1A.

In step S2 a specification is received of a multi-core processor on which the neural network.is to be mapped for execution, for example the multi-core processor (100) shown in FIG. 1B

In step S3, an initial lowest priority value, e.g. the value 0 is assigned to each node and each edge. Pni = 0 for all i and Peij = 0 for all ij. Therein Pni is the priority value of a node Ni, and Peij is the priority value of an edge Eij.

In step S4, a current subset of edges SBE is initialized as the set of edges E0j. In the example of FIG. 1A, the current subset SBE comprises the edges E01, E02.

Then alternately a node prioritization step S5 is applied to a current subset of nodes and an edge prioritization step S6 is performed to a current subset of edges.

In a first sub-step S51 of the node prioritization step S5, the current subset SBN of nodes Nj is initialized as an empty set, i.e. SBN = ø.

In a second sub-step S52, the destination node Nj of each edge Eij in the current subset SBE of edges is prioritized as follows.

$$Pnj = \max\,(Pnj, Peij)$$

In this example, nodes N1 and N2 are assigned the priority value Pn1=0 and Pn2=0.

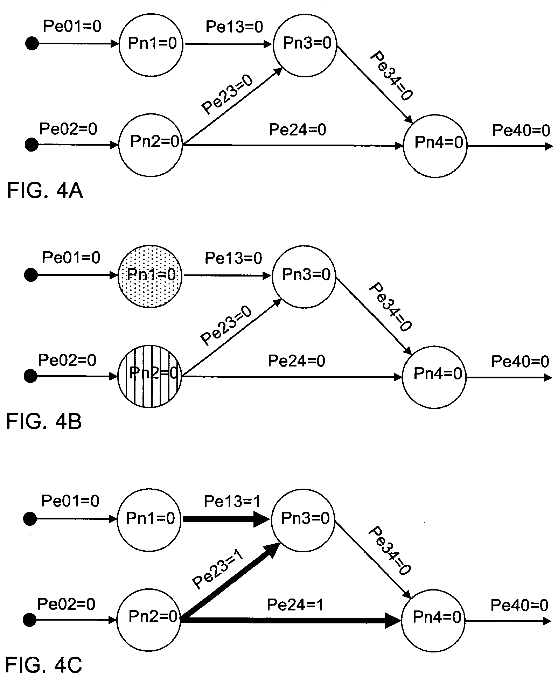

It is noted that a node may be visited more than once, as multiple edges may share a common destination node. The visited node Nj is added to the current subset SBN if it is not yet a member node. The nodes in the current subset SBN upon completion of step S52 are shown in hatched mode in FIG. 4B.

Because the subset of nodes SBN is not empty, the procedure continues with the edge prioritization step S6. The edge prioritization step S6, comprises a first sub-step S61, wherein the current set of edges SBE is initialized as empty set. Then in a second sub-step S62 for each node Ni in the current set of nodes SBN, each of its outgoing edges Peij is prioritized as

Peij = Pnj+1, having the result shown in FIG. 4C.

It is noted that the added priority weight does not need to be 1, but may have an other value, e.g. 0.3 or 7 as long as prioritization of the edges is performed consistently. Also a negative priority weight may be added in case a lower priority value defines a higher priority for execution. The outgoing edges are each added to the current set of edges SBE. The outgoing edges in the set SBE, that were prioritized in step S62, are indicated by thick arrows in FIG. 4C.

The procedure continues again with sub-step S51, wherein the current set of nodes SBN is initialized as SBN = ø.

In the second sub-step S52, the destination nodes N3 and N4 of each edge Eij in the current subset SBE of edges is prioritized as follows.

$$Pnj = \max\,(Pnj, Peij)$$

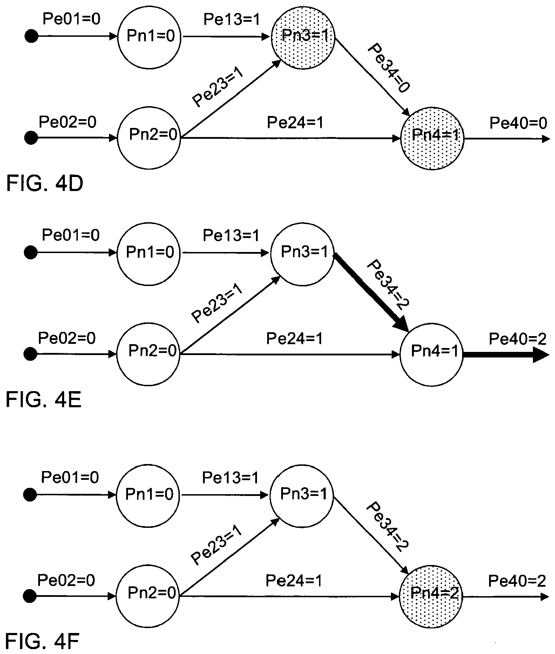

As a result, both destination node N3 and N4 are assigned priority value 1, and added the current set of nodes SBN, as shown in FIG. 4D.

Because the subset of nodes SBN is not empty, the procedure continues with the first sub-step S61 of step S6, wherein the current set of edges SBE is initialized as empty set. Then in sub-step S62 for each node Ni in the current set of nodes SBN, each of its outgoing edges Peij is prioritized as Peij = Pnj+1. In this example this results in the priority assignment Pe34 = 2, and Pe40 = 2 as shown in FIG. 4E.

Once more step S5 is performed. As shown in FIG. 4F, the node N4 is reprioritized to a value Pn4 = 2, due to the fact that the priority of the incoming edge Pe34 is higher than its current priority.

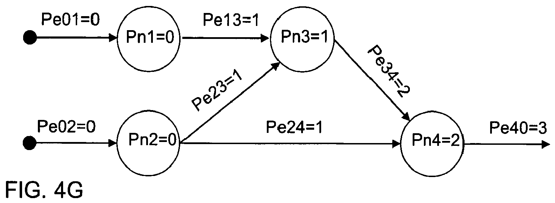

As shown in FIG. 4G, step S6 may be performed once more to reprioritize edge E40 to a value P40 = 3. This is however not strictly necessary, unless the edge E40 is an input for another task graph wherein the priority of E40 needs to be compared with other priorities.

Due to the fact that the task graph is acyclic, the prioritization procedure ends if during the node prioritization step the current subset of nodes SBN remains empty.

It is noted that the assigned priority levels are static for a given task graph. Furthermore, for any particular core (and router) only a limited subset of all priority levels needs to be considered for local implementation. In an exemplary embodiment of the improved neural network processor, 4 priority levels are sufficient per core (per router) and the neural-network layer number is used as the priority level, and encoded locally by numbers 0,1,2,3.

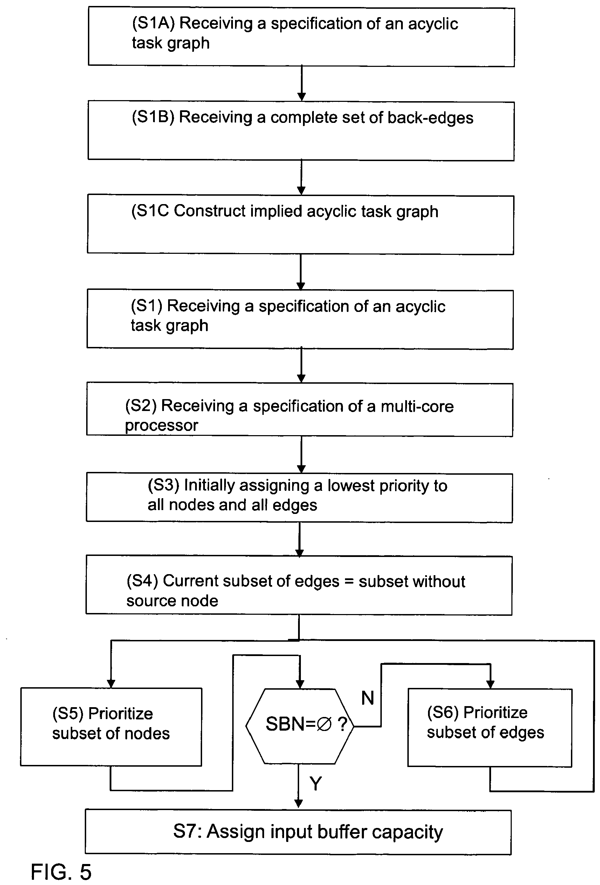

FIG. 5 shows an extended version of the method that renders it also possible to provided a mapping for a cyclic graph.

In step S1A the specification of the cyclic task graph representing a neural network is received.

In step S1B additionally a complete set of back edges is received, which is specified for the cyclic task graph. The production-consumption behavior for each edge is ultimately periodic, with a bounded production-consumption protocol and with a corresponding back-edge bound B.

In step S1C an implied acyclic task graph is constructed by removal of the complete set of back edges from the cyclic task graph. Subsequently, the procedure continues with execution of steps S2 to S6 as described with reference to FIG. 2, 3, and 4A - 4F. However, subsequent to completion of the procedure in in steps S2 - S6, a further step S7 is performed, wherein each input buffer is assigned a capacity that exceeds the sum of back-edge bounds of all back-edges mapped onto that input buffer.

FIG. 6 schematically illustrates an embodiment of a method wherein the neural network specified by the acyclic task graph that is mapped on the multi core processor is executed.

In step S10 a processor core of the multi-core processor (100), e.g. processor cores (1) executes a task A that is specified by a node in the task graph.

In step S11 an input message for a task B is received in an input buffer of the processor core.

In step S12 the priority value for the current task A, and the priority value of the task B for which the input message is received are compared.

The steps S11, S12 may take place while the processor core continues to execute the task A.

If it is decided in step S13 that the task B for which an input message was received has a higher priority value than that of the task A currently being executed, the procedure continues with step S14, wherein the execution of the current task A is suspended. Processor core resources, e.g. registers may be released by saving their contents in a cache.

In step S14, the processor core executes the higher priority task B for which the input message was received.

Once the higher priority task B is completed or needs to wait for a further input message, the processor core proceeds with the task A which it was executing in step S10.

If the priority value of the task B for which the input message was received in step S11 does not exceed the priority value of the current task A, the processor core continues to process task A.

While executing the higher priority task B, an input message may be received for a still higher ranked task C. In that case task B is suspended in favor of task C similarly as task A was suspended in favor of task B. Likewise task C may be suspended in favor of a task with a still higher priority and so on.

The method of mapping a cyclic or acyclic task graph specifying a neural network for execution by a multi-core processor is a computer implemented method. In an embodiment the multi-core processor is itself configured to perform the mapping. In another embodiment the mapping is performed by another data processor, for example a suitably programmed general purpose processor.

### Claims

1. A method for mapping an acyclic task graph specifying a neural network for execution by a multi-core processor, the acyclic task graph comprising a plurality of nodes interconnected by directed edges, each node representing a computational task to be performed in the process of executing the neural network, each edge directed from a source node to a destination node representing the dependency of the computational task represented by the destination node on event messages from a computational task represented by the source node, the multi-core processor comprising a plurality of processor cores configured to exchange messages in a message exchange network on chip (NoC) comprising NoC routers interconnected by NoC links, the method for mapping comprising:

   assigning (S52) a priority to each node of the task graph and assigning the prioritized node to a processor core of the multi-core processor, and
   assigning (S62) a priority to each edge and assigning the prioritized edge to an (acyclic) NoC path of NoC links;
   where the priority assigned to each node is the highest one of the priorities assigned to its incoming edges, and
   where the priority assigned to each edge exceeds the priority of the node from which it is outgoing.

2. A method for mapping a cyclic task graph specifying a neural network for execution by a multi-core processor, the cyclic task graph comprising a plurality of nodes interconnected by directed edges, each node representing a computational task to be performed in the process of executing the neural network, each edge directed from a source node to a destination node representing the dependency of a computational task represented by the destination node on event messages from a computational task represented by the source node, the multi-core processor comprising a plurality of processor cores configured to exchange messages in a network on chip (NoC) comprising NoC routers interconnected by NoC links, a complete set of back edges being specified for the cyclic task graph, wherein for each back edge the production-consumption behavior is ultimately periodic, and there is a bounded production-consumption protocol with a corresponding back-edge bound B, the method comprising a scheduling procedure combining assigning of priorities to tasks and computation of input-buffer sizes, the scheduling procedure comprising:

   - constructing (S1C) an implied acyclic task graph by removal of the complete set of back edges from the cyclic task graph;
   - assigning of priorities to the nodes and to the edges of the constructed implied acyclic task graph with the method of claim 1;
   - assigning (S7) a capacity to each input buffer that exceeds the sum of back-edge bounds of all back-edges mapped onto that input buffer.

3. The method according to claim 1 or 2, further comprising executing the artificial neural network specified by the acyclic task graph that is mapped on the multi core processor, said executing comprising:

   a processor core (1) of the multi core processor executing (S10) a first task assigned thereto;
   the processor core (1) receiving (S11) an input message for a second task;
   the processor core (1) comparing (S12) a priority of the second task with the priority of the first task;
the processor core (1), upon determining (S13) that the priority of the second task exceeds the priority of the first task:

suspending (S14) the execution of the first task;
executing (S15 the second task; and
resuming (S16) execution of the first task upon completion of the second task.

4. A multi-core processor (100) comprising a plurality of processor cores (1, 1a, ... , 1o) configured to exchange messages in a message exchange network (7) on chip (NoC) comprising NoC routers (71) interconnected by NoC links (72), the multi-core processor (100) being configured to execute a neural network specified as a task graph comprising a plurality of nodes interconnected by directed edges, each node representing a computational task to be performed in the process of executing the neural network, each edge directed from a source node to a destination node representing the dependency of the computational task represented by the destination node on event messages from a computational task represented by the source node, each task of the task graph being assigned to a processor core of the multi-core processor, and each task dependency being mapped to an (acyclic) NoC path of NoC links (72), wherein a processor core of the multi-core processor (100) comprises an input buffer for receiving input messages, and the processor core is configured to:

execute (S10) a first task assigned thereto;
receive (S11) an input message for a second task;
compare (S12) a priority of the second task with the priority of the first task;
upon determining (S13) that the priority of the second task exceeds the priority of the first task to:

suspend (S14) the execution of the first task;
execute (S15 the second task; and
resume (S16) execution of the first task upon completion of the second task.

E01 → N1 → E13 → N3 → E34 → N4 → E40

E02 → N2 → E23 → N3

N2 → E24 → N4

FIG. 1A

| 1 | 1a | 1b | 1c |
|---|----|----|----|

71

| 1d | 1e | 1f | 1g |
|----|----|----|----|

| 1h | 1i | 1j | 1k |
|----|----|----|----|

| 1l | 1m | 1n | 1o |
|----|----|----|----|

72

7 { 71
    72

100

FIG. 1B

FIG 2

S5

S51 Initialize SBN= $\varnothing$

S52 For each edge Eij in the current subset of edges SBE :

Pnj = max(Ppj, Peij)

Add destination node Nj to current subset SBN of destination nodes if it is not yet included.

If SBN=$\varnothing$: Exit

S6

S61 Initialize SBE= $\varnothing$

S62 For each node Ni SBN:

For each edge Eij of each node Ni
Peij = Pnj+1

Add Eij to SBE

FIG 3

FIG. 4A

FIG. 4B

FIG. 4C

FIG. 4D

FIG. 4E

FIG. 4F

FIG. 4G

```
┌─────────────────────────────────────────────────┐
│  (S1A) Receiving a specification of an acyclic   │
│  task graph                                      │
└─────────────────────────────────────────────────┘
                        │
                        ▼
┌─────────────────────────────────────────────────┐
│  (S1B) Receiving a complete set of back-edges    │
│                                                  │
└─────────────────────────────────────────────────┘
                        │
                        ▼
┌─────────────────────────────────────────────────┐
│  (S1C Construct implied acyclic task graph       │
│                                                  │
└─────────────────────────────────────────────────┘
                        │
                        ▼
┌─────────────────────────────────────────────────┐
│  (S1) Receiving a specification of an acyclic    │
│  task graph                                      │
└─────────────────────────────────────────────────┘
                        │
                        ▼
┌─────────────────────────────────────────────────┐
│  (S2) Receiving a specification of a multi-core  │
│  processor                                       │
└─────────────────────────────────────────────────┘
                        │
                        ▼
┌─────────────────────────────────────────────────┐
│  (S3) Initially assigning a lowest priority to   │
│  all nodes and all edges                         │
└─────────────────────────────────────────────────┘
                        │
                        ▼
┌─────────────────────────────────────────────────┐
│  (S4) Current subset of edges = subset without   │
│  source node                                     │
└─────────────────────────────────────────────────┘
```

$$SBN = \varnothing \ ?$$

| (S5) Prioritize subset of nodes | (S6) Prioritize subset of edges |

N

Y

┌─────────────────────────────────────────────────┐
│         S7: Assign input buffer capacity         │
└─────────────────────────────────────────────────┘

**FIG. 5**

```
              ┌──────────────────────────────────────┐
              │      (S10) Execute current task       │
              └──────────────────────────────────────┘
                                │
                                ▼
              ┌──────────────────────────────────────┐
              │     (S11) Receive input message       │
              └──────────────────────────────────────┘
                                │
                                ▼
              ┌──────────────────────────────────────┐
              │     (S12) Compare task priorities     │
              └──────────────────────────────────────┘
                                │
                                ▼
                          ╱───────────╲
              ┌───────────┤    S13     ├───────────┐
              │           ╲───────────╱            │
              │                                    ▼
              │           ┌──────────────────────────────────────┐
              │           │      (S14) Suspend current task       │
              │           └──────────────────────────────────────┘
              │                                    │
              │                                    ▼
              │           ┌──────────────────────────────────────┐
              │           │        (S15) Execute new task         │
              │           └──────────────────────────────────────┘
              │                                    │
              └────────────────────┬───────────────┘
                                   ▼
              ┌──────────────────────────────────────┐
              │    (S16)Proceed with current task     │
              └──────────────────────────────────────┘
                                   │
                                   ▼
```

FIG. 6

Europäisches
Patentamt

European
Patent Office

Office européen
des brevets

# EUROPEAN SEARCH REPORT

Application Number

EP 21 29 0097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/095840 A1 (GOOGLE INC [US]) 8 June 2017 (2017-06-08) | 1,2,4 | INV.<br>G06F9/54<br>G06F9/48 |
| A | * paragraphs [0006] – [0009] *<br>* paragraphs [0020] – [0021] *<br>* paragraph [0031] *<br>* paragraphs [0052] – [0054] *<br>* paragraph [0089] *<br>* figure 1 *<br>* figure 2 *<br>* claims 1,3 * | 3 | |
| A | EP 2 405 353 B1 (SAP SE [DE]) 22 November 2017 (2017-11-22)<br>* paragraphs [0040] – [0045]; figure 2 * | 1-4 | |
| A | US 2020/104136 A1 (WHALLEY DAVID [US] ET AL) 2 April 2020 (2020-04-02)<br>* paragraph [0010] * | 1-4 | |
| A,D | ALINE MELLO ET AL: "Virtual channels in networks on chip",<br>PROCEEDINGS 18TH. SYMPOSIUM ON INTEGRATED CIRCUITS AND SYSTEMS DESIGN. SBCCI 2005. FLORIANOPOLIS, BRAZIL, SEPT. 4 – 7, 2005; [PROCEEDINGS SYMPOSIUM ON INTEGRATED CIRCUITS AND SYSTEMS DESIGN], NEW YORK, NY : ACM, US,<br>4 September 2005 (2005-09-04), pages 178-183, XP058144714,<br>DOI: 10.1145/1081081.1081128<br>ISBN: 978-1-59593-174-0<br>* the whole document * | 1-4 | TECHNICAL FIELDS SEARCHED (IPC)<br><br>G06F |

The present search report has been drawn up for all claims

| Place of search | Date of completion of the search | Examiner |
|---|---|---|
| The Hague | 12 May 2022 | Dieben, Marc |

EPO FORM 1503 03.82 (P04C01)

**EP 4 202 682 A1**

## ANNEX TO THE EUROPEAN SEARCH REPORT
## ON EUROPEAN PATENT APPLICATION NO.

EP 21 29 0097

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2022

| Patent document cited in search report | | | Publication date | Patent family member(s) | | | Publication date |
|---|---|---|---|---|---|---|---|
| WO 2017095840 | A1 | | 08-06-2017 | CN | 108369663 | A | 03-08-2018 |
| | | | | DE | 112016005536 | T5 | 06-09-2018 |
| | | | | EP | 3369045 | A1 | 05-09-2018 |
| | | | | GB | 2559525 | A | 08-08-2018 |
| | | | | JP | 6644890 | B2 | 12-02-2020 |
| | | | | JP | 2019501451 | A | 17-01-2019 |
| | | | | KR | 20180077260 | A | 06-07-2018 |
| | | | | US | 2017161604 | A1 | 08-06-2017 |
| | | | | WO | 2017095840 | A1 | 08-06-2017 |
| EP 2405353 | B1 | | 22-11-2017 | NONE | | | |
| US 2020104136 | A1 | | 02-04-2020 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MELLO et al.** Virtual Channels in Networks on Chip: Implementation and Evaluation on Hermes NoC. *Conference Paper,* January 2005